# EUROPÄISCHE PATENTSCHRIFT

(11) **EP 4 246 029 B1**
(45) Veröffentlichungstag und Bekanntmachung des Hinweises auf die Patenterteilung: **18.09.2024**
(21) Anmeldenummer: 23160199.8
(22) Anmeldetag: 06.03.2023
(51) Int. Cl.: F16L 55/30, F16L 55/44, F16L 101/10, F16L 101/30

(54) **KANALROHR-INSPEKTIONSSYSTEM**
SEWER PIPE INSPECTION SYSTEM
SYSTÈME D'INSPECTION DE CANALISATIONS

(30) Priorität: 15.03.2022 DE 102022202557
(43) Veröffentlichungstag der Anmeldung: 20.09.2023
(73) Patentinhaber: IBAK Helmut Hunger GmbH & Co. KG, 24148 Kiel (DE)
(72) Erfinder: Stock, Dipl.-Ing. Markus, 24148 Kiel (DE)
(74) Vertreter: Patentanwälte Hemmer Lindfeld Frese Partnerschaft mbB

(56) Entgegenhaltungen:
- EP-A1- 3 346 175
- EP-B1- 3 633 260
- DE-A1- 102015 106 333
- DE-A1- 102017 105 747
- DE-U1- 202017 007 265
- GB-A- 2 450 621

## Beschreibung

Die Erfindung betrifft ein Kanalrohr-Inspektionssystem mit einem Vorschubelement zum Vorschieben eines Inspektionsgerätes in einem Kanalrohr.

Derartige Kanalrohr-Inspektionssysteme, welche ein Vorschubelement zum Vorschieben eines Inspektionsgeräts in einem Kanalrohr aufweisen, sind z.B. als handbetätigte Schiebesysteme bekannt. Diese Systeme weisen üblicherweise einen auf einer Haspel aufgewickelten Schiebestab auf, an dessen Ende ein Inspektionsgerät wie z.B. eine Kamera angeordnet ist. Über den Schiebestab wird die Kamera in das Kanalrohr vorgeschoben. Dazu ist es jedoch erforderlich, ein Gegenlager am Kanalrohr abzustützen, insbesondere ein Gegenlager, welches die Haspel am Kanalrohr fixiert. Eine solche Vorrichtung ist beispielsweise aus DE 10 2017 105 747 A1 bekannt. Das dort offenbarte System weist eine druckfeste Hülle auf, durch welche der Schiebestab geführt ist und welche mit der Haspel verbunden ist und am Anfang des Kanalrohrs verspannt werden kann. DE 10 2015 106333 A1 offenbart ein weiteres Kanalrohr-Inspektionssystem, wie es aus dem Stand der Technik bekannt ist.

Es ist Aufgabe der Erfindung, ein Kanalrohr-Inspektionssystem mit einem Vorschubelement zum Vorschieben eines Inspektionsgerätes in seiner Handhabung zu verbessern. Diese Aufgabe wird durch ein Kanalrohr-Inspektionssystem mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Kanalrohr-Inspektionssystem weist ein Vorschubelement zum Vorschieben eines Inspektionsgerätes in einem Kanalrohr auf. Dabei handelt es sich vorzugsweise um Kanalrohre mit einem Durchmesse größer als 80mm, weiter bevorzugt größer als 100mm. Dieses Vorschubelement kann beispielsweise ein Schiebestab sein. Das Inspektionsgerät ist z.B. eine Kamera, ein Kamerasystem und/oder ein Bearbeitungswerkzeug, welches am freien Ende des Vorschubelementes angeordnet ist. Zur Ausbildung eines Gegenlagers für das Vorschubelement weist das Kanalrohr-Inspektionssystem eine Verspanneinheit auf, welche so ausgebildet ist, dass sie sich im Inneren des Kanalrohrs, insbesondere im Bereich des Rohranfangs verspannen kann, sodass eine kraftschlüssige Verbindung zwischen der Verspanneinheit und der Innenwandung des Kanalrohrs geschaffen wird, welche es ermöglicht, die beim Vorschieben und Zurückziehen des Vorschubelements auftretenden Kräfte zu übertragen bzw. aufzunehmen. Dabei ist die Verspanneinheit bevorzugt so dimensioniert, dass sie sich in Kanalrohren mit einem Durchmesser größer 80 mm, weiter bevorzugt größer 100 mm verspannen kann. Die Verspanneinheit wirkt derart als Gegenlager, dass das Vorschubelement relativ zu der Verspanneinheit vor- und zurückbewegt werden kann und die dabei auftretenden Gegenkräfte über die Verspanneinheit auf das Kanalrohr übertragen werden.

Erfindungsgemäß weist die Verspanneinheit einen Zentralkörper und zumindest ein am Umfang des Zentralkörpers angeordnetes aufblasbares Kissen auf. Dieses Kissen ist vorzugsweise durch Befüllen mit einer Flüssigkeit oder einem Gas aufblasbar. Besonders bevorzugt ist es so ausgebildet, dass es mit Hilfe von Druckluft aufblasbar ist. Das Kissen ist so ausgebildet, dass sein Außendurchmesser im aufgeblasenen Zustand vorzugsweise größer ist als der Innendurchmesser eines Kanalrohres, auf welches das Inspektionsgerät abgestimmt ist. D.h. das Inspektionsgerät und insbesondere dessen Verspanneinheit ist an bestimmte genormte Kanalrohrdurchmesser angepasst, sodass das Kissen durch Aufblasen an der Innenwandung des Kanalrohrs verspannt werden kann. Das Kissen erstreckt sich zumindest in einem nicht aufgeblasenen Zustand über einen ersten Umfangsbereich, welcher kleiner als 360° ist. Dies bedeutet, erfindungsgemäß erstreckt sich das zumindest eine Kissen, wenn es nicht aufgeblasen ist, nicht über den gesamten Außenumfang des Zentralkörpers, bezogen auf die Vorschubachse, entlang derer das Vorschubelement vorgeschoben wird. Erfindungsgemäß erstreckt sich das zumindest eine Kissen nicht aufgeblasen nur über einen ersten Umfangsbereich, welcher einen Teilumfang darstellt. Dieser ist so gewählt, dass das Kissen im Inneren des Kanalrohres verspannt werden kann, jedoch ein Umfangsbereich des Zentralkörpers verbleibt, welcher frei von dem oder den Kissen ist, wenn dieses nicht aufgeblasen ist bzw. diese nicht aufgeblasen sind. Dieser kissenfreie Umfangsbereich verbessert die Handhabung des Kanalrohrinspektionssystems. So kann in diesem Bereich beispielsweise eine Vorflut aufrechterhalten werden. Ferner ist, zumindest wenn das Kissen nicht aufgeblasen bzw. nicht befüllt ist, in diesem Bereich der Zentralkörper frei zugänglich, sodass die Montage des Inspektionssystems vereinfacht wird und es insbesondere ermöglicht werden kann, dass das Schiebeelement von der Umfangsseite her, d.h. seitlich in den Zentralkörper eingelegt werden kann und nicht durch die Verspanneinheit hindurchgefädelt werden muss. Im aufgeblasenen Zustand des Kissens oder der Kissen kann die zuvor vorhandenen Lücke, d.h. der kissenfreie Umfangsbereich verkleinert oder in eine besonderen Ausführungsform auch im Wesentlichen geschlossen sein. So kann das zumindest eine Kissen beispielsweise so ausgestaltet sein, dass es sich auch in Umfangsrichtung ausdehnt, so dass in Umfangsrichtung gesehen die Längsenden des zumindest einen Kissens aneinander stoßen.

Vorzugsweise erstreckt sich das zumindest eine aufblasbare Kissen, zumindest in seinem nicht aufgeblasenen Zustand, über einen ersten Umfangsbereich, welcher größer als 270° jedoch kleiner als 320° ist. Der Umfangsbereich ist dabei ein Umfang um die Längsachse des Zentralkörpers, welche sich in der Vorschubrichtung des Vorschubelementes erstreckt. Wenn sich das Kissen über einen Umfangsbereich zwischen 270° und 320° über den Umfang erstreckt, verbleibt somit zumindest im nicht aufgeblasenen Zustand ein Umfangsbereich ohne Kissen zwischen 40° und 90°, d.h. eine Lücke in der umfänglichen Erstreckung des zumindest einen Kissens. Sinnvollerweise erstreckt sich jedoch das Kissen wenigstens über einen Umfangsbereich, welcher größer als 180° ist, sodass ein Verspannen in allen Richtungen im Kanalrohrquerschnitt gewährleistet ist und die Verspanneinheit in dem Kanalrohr sicher fixiert werden kann. Besonders bevorzugt kann sich das Kissen, zumindest in seinem nicht aufgeblasenen Zustand, über einen Umfangsbereich von im Wesentlichen 300° erstrecken, sodass ein 60°-Freiraum ohne Kissen am Außenumfang des Zentralkörpers verbleibt.

Das Kissen ist beispielsweise aus einem elastisch aufweitbaren Material, vorzugsweise einem Elastomer oder Gummimaterial gefertigt. Dabei ist das Material so gewählt oder ausgestaltet, dass es für das aufzunehmende Fluid, insbesondere das aufzunehmende Gas im Wesentlichen dicht ist. Ferner ist die Elastizität vorzugsweise so gewählt, dass sich das Kissen, wenn die Füllung abgelassen wird, soweit zusammenzieht, dass es gut wieder aus dem Kanalrohr entnehmbar ist.

Das zumindest ein aufblasbare Kissen kann in einer möglichen Ausgestaltung aus einem Gewebematerial gefertigt sein. Ein solches Gewebematerial kann eine ausreichende Festigkeit gewährleisten. Auch eine Elastizität könnte mit einem Gewebematerial erreicht werden. Eine Elastizität kann z.B. dabei durch die Gewebestruktur und/oder die Ausgestaltung der Fasern des Gewebematerials sichergestellt werden.

Auch ein mehrlagiger Aufbau des Kissenmaterials ist möglich. So kann beispielsweise eine Lage vorgesehen sein, um eine ausreichende Gasdichtigkeit zu gewährleisten, während eine andere Lage, für eine ausreichende Festigkeit sorgt, um die auftretenden Kräfte aufzunehmen. Die Außenseite des Kissens, welche mit der Kanalrohr-Innenwandung in Kontakt kommt, ist vorzugsweise so ausgebildet, dass eine ausreichende Abriebsfestigkeit gegeben ist und ein guter kraftschlüssiger Eingriff mit der Kanalrohr-Innenwandung möglich ist. Auch dies kann beispielsweise durch eine Gewebestruktur realisiert werden. Es ist jedoch auch möglich, die Außenfläche des Kissens in anderer Weise ausreichend fest und für den Eingriff mit der Rohrwandung auszugestalten. So könnten an der Außenseite des Kissens beispielsweise auch Eingriffselemente und/oder Anlageelemente befestigt sein, welche eine größere Festigkeit und/oder eine bessere Eingriffsstruktur für den Eingriff mit der Kanalwandung aufweisen.

Der Zentralkörper weist eine Führung für das Vorschubelement auf. D.h. das Vorschubelement ist in Längsrichtung, d.h. seiner Vorschubrichtung, durch den Zentralkörper geführt, so dass es durch den Zentralkörper hindurch relativ zu diesem vor- und zurückbewegt werden kann. Die Führung kann beispielsweise als Nut und/oder als rohrförmige Führung ausgebildet sein, wobei das Vorschubelement bei seiner Bewegung vorzugsweise an der Innenwandung der Führung entlanggleitet. Die Führung weist bevorzugt einen Querschnitt auf, welcher entsprechend größer als der Außenquerschnitt des Führungselementes ist, sodass ein Verklemmen des Vorschubelementes in der Führung verhindert wird.

Gemäß der Erfindung weist die Führung eine sich über die gesamte axiale Länge der Führung erstreckende, zum Außenumfang der Verspanneinheit hin gewandte Ausnehmung auf. Die Ausnehmung ist dabei vorzugsweise zum Außenumfang der Verspanneinheit hin geöffnet, sodass die Führung mit der Ausnehmung eine zum Außenumfang hin geöffnete Nut bildet. Die Führung und die Ausnehmung erstrecken sich dabei parallel zur Vorschubrichtung des Vorschubelementes. Dies ermöglicht es, dass das Vorschubelement vom Außenumfang her in die Führung einlegbar ist, d.h. quer bzw. radial zu der Längs- bzw. Vorschubrichtung. Dies ermöglicht eine sehr einfache Montage und Demontage von Verspanneinheit und Vorschubelement, da das Vorschubelement nicht durch die Verspanneinheit in der Vorschubrichtung hindurchgefädelt werden muss.

Die Ausnehmung ist bevorzugt in einem zweiten von dem ersten Umfangsbereich verschiedenen Umfangsbereich gelegen. Dieser zweite Umfangsbereich liegt somit in dem von dem zumindest einen Kissen freigelassenen Umfangsbereich, d.h. der von dem Kissen gebildeten Lücke. Die zumindest in seinem nicht aufgeblasenen Zustand vorhandene umfängliche Lücke des zumindest einen Kissens liegt somit vorzugsweise über der Ausnehmung. Dies ermöglicht ein Einsetzen des Vorschubelementes in die Führung, ohne das Kissen demontieren zu müssen Die Ausnehmung bildet somit in dem zweiten Umfangsbereich einen freien Querschnittssektor.

Das zumindest eine aufblasbare Kissen ist vorzugsweise so dimensioniert und geformt, dass es in seinem aufgeblasenen Zustand derart an einer Rohrwandung zur Anlage kommen kann, dass es den Zentralkörper im Inneren der Rohrwandung verspannt. Dabei ist das Kissen weiter bevorzugt so ausgebildet, dass der Zentralkörper im Wesentlichen zentral im Rohrdurchmesser verspannt wird, d.h. sich vorzugsweise die Vorschubachse, entlang derer das Vorschubelement vorgeschoben wird, zentral im Rohrdurchmesser oder in der Nähe der Rohrmitte erstreckt. Dazu sind das Kissen und der Zentralkörper vorzugsweise so ausgebildet, dass eine Führung für die Verspanneinheit im aufgeblasenen Zustand des Kissens zentral im Rohrdurchmesser gelegen ist. Dadurch, dass das Kissen, wie oben beschrieben, in einem Umfangsbereich von größer als 180° am Innenumfang des Rohres zur Anlage kommt, wird eine Kraftübertragung in alle radialen Richtungen auf die Rohrwandung gewährleistet, auch wenn es einen Umfangsbereich gibt, in welchem das Kissen nicht angeordnet ist, d.h. es einen zweiten, kissenfreien Umfangsbereich gibt.

Das Kanalrohr-Inspektionssystem weist weiter bevorzugt eine mit dem zumindest einen aufblasbaren Kissen verbundene Druckgaszufuhr auf, welche vorzugsweise durch den Zentralkörper verläuft. Über diese Druckgaszufuhr ist es möglich, das Kissen aufzublasen. Die Druckgaszufuhr weist dabei zweckmäßigerweise zumindest ein Ventil auf, um die Zufuhr absperren zu können und das Kissen in seinem aufgeblasenen Zustand zu halten. Durch Öffnen des zumindest einen Ventils kann das Druckgas aus dem Kissen wieder abgelassen werden. Die Druckgaszufuhr kann vorzugsweise einen Kompressor oder Druckgasspeicher zum Befüllen des Kissens aufweisen. Auch die Verwendung einer Handpumpe ist denkbar. Das Kissen ist mit der Druckgaszufuhr vorzugsweise am Zentralkörper verbunden, sodass das Druckgas vom Innenumfang des Kissens, d.h. von einer dem Zentralkörper zugewandten Seite dem Kissen zugeführt wird.

In einer weiteren möglichen Ausgestaltung weist der Zentralkörper an seinem Außenumfang radial äußere Anlageabschnitte auf, an welchen das zumindest eine aufblasbare Kissen, zumindest in seinem aufgeblasenen Zustand, zur Anlage kommt. D.h. das Kissen drückt im aufgeblasenen Zustand in radialer Richtung nach innen gegen die Anlageabschnitte des Zentralkörpers und radial nach außen gegen eine umgebende Rohrwandung, sodass ein Verspannen des Zentralkörpers im Inneren des Rohres erreicht wird.

Zwischen den Anlageabschnitten des Zentralkörpers sind vorzugsweise Einbuchtungen gelegen. Diese Einbuchtungen können so geformt sein, dass im aufgeblasenen Zustand das Kissen im Bereich der Einbuchtungen nicht vollständig an der Außenwandung des Zentralkörpers anliegt. Die Einbuchtungen haben jedoch den Vorteil, dass sie das Kissenmaterial aufnehmen können, wenn das Kissen nicht aufgeblasen ist. So werden durch die Einbuchtungen Aufnahmeräume für die Kissenwandung geschaffen, sodass die Struktur des Kissens im nicht befüllten Zustand sicher und geschützt am Zentralkörper gehalten werden kann.

Weiter bevorzugt weist die Kontur der Anlageabschnitte und der zwischen diesen gelegenen Einbuchtungen im Umfangsbereich eine Länge auf, welche der Länge des zumindest einen Kissens in seinem nicht aufgeblasenen Zustand entspricht. D.h. die Umfangslinie, welche entlang der Anlageabschnitte und der Oberfläche der Einbuchtungen verläuft, ist im Wesentlichen genau so lang, wie das Kissen in Umfangsrichtung. So kann im nicht aufgeblasenen Zustand eine vollständige Anlage des Kissens am Außenumfang des Zentralkörpers erreicht werden, sodass das Kissen faltenfrei, vor Beschädigungen geschützt am Außenumfang gehalten werden kann. Ferner ermöglicht dies, dass die Größenveränderungen des Kissens zwischen dem nicht aufgeblasenen und dem aufgeblasenen Zustand nicht allein oder überhaupt nicht durch die Elastizität der Außenwandung des Kissens erreicht werden muss. Vielmehr kann das Kissen im nicht befüllten Zustand in die Einbuchtungen hinein gedrückt oder gezogen werden, ohne in seiner Länge in Umfangsrichtung wesentlich verkürzen zu müssen. Dies ermöglicht die Verwendung von robusten, weniger elastischen Materialien für die Kissenwandung.

Gemäß einer weiteren möglichen Ausführungsform der Erfindung sind an dem Zentralkörper und dem zumindest einen aufblasbaren Kissen Zugelemente, insbesondere elastische Zugelemente derart angeordnet, dass sie die im Bereich der Einbuchtungen gelegenen Abschnitte des zumindest einen Kissens in dessen nicht aufgeblasenen Zustand in die Einbuchtungen hineinziehen. So wird das Kissen bzw. werden die Wandung des Kissens im nicht aufgeblasenen Zustand nicht oder nicht ausschließlich durch die Elastizität des Kissenmaterials radial nach innen gezogen, sondern durch Zugelemente, welche im Bereich der Einbuchtungen angeordnet sind. Beim Befüllen des Kissens wird eine Kraft erzeugt, welche die von den Zugelementen aufgebrachte Zugkraft überwindet und das Kissen radial nach außen drückt. Die auf die Zugelemente wirkende Zugkraft kann durch die Elastizität der Zugelemente erreicht werden oder aber alternativ oder zusätzlich durch ein Spannelement, wie zumindest eine Feder oder auch ein manuell zu betätigendes Spannelement.

Die Zugelemente können vorzugsweise als elastische Bänder ausgebildet sein, welche sich über die dem Zentralkörper abgewandte Seite des zumindest einen Kissens, d.h. an dessen Außenseite erstrecken. Dabei erstrecken sich die Zugelemente bzw. Bänder vorzugsweise parallel zur Längsrichtung des Zentralkörpers, d.h. parallel zur Vorschubrichtung des Vorschubelementes. Wenn diese Zugelemente sich zusammenziehen, ziehen oder drücken sie das Material des Kissens in die Einbuchtungen hinein. Dabei können die Zugelemente selber ebenfalls in die Einbuchtungen eintreten. Im aufgeblasenen Zustand des Kissens liegen die Zugelemente zwischen der Außenwandung des Kissens und der Rohrinnenwandung. Aufgrund der Flexibilität des Kissenmaterials kann sich dieses im Bereich der Zugelemente nach innen verformen, sodass es zwischen den Zugelementen flächig an der Rohrinnenwandung zur Anlage kommen kann.

Weiter bevorzugt erstreckt sich jeweils ein Zugelement parallel zu einer Einbuchtung, d.h. radial außerhalb der Einbuchtung parallel zu dieser, sodass es sich, z.B. wenn es sich elastisch zusammenzieht, gemeinsam mit dem Kissenmaterial in die Einbuchtung hinein bewegen kann und das Kissenmaterial in der Einbuchtung hält.

Die Zugelemente bzw. elastischen Bänder erstrecken sich weiter bevorzugt durch zumindest einen sich in Längsrichtung durch den Zentralkörper erstreckenden Kanal. So können schlaufenförmige elastische Bänder verwendet werden, welche außen über das Kissen verlaufen und innen durch den Zentralkörper geführt sind. Dabei kann ein einziger zentraler Kanal in dem Zentralkörper vorgesehen sein. Es können jedoch auch mehrere Kanäle ausgebildet sein, sodass beispielsweise jedes elastische Band durch einen einzelnen Kanal geführt sein kann. Zum Bilden geschlossener Ringe oder Schlaufen können die elastischen Bänder mit ihren Enden verknotet oder in anderer geeigneter Weise fixiert sein. Beispielsweise können Klemmelemente an dem Zentralkörper zum Fixieren der Enden der Bänder angeordnet sein.

Wie oben beschrieben, weist die Kanalrohr-Inspektionseinrichtung vorzugsweise eine Wickelvorrichtung zum Aufwickeln des Vorschubelementes auf. Dies kann beispielsweise eine motorisch betätigte oder handbetätigte Haspel sein. Die Wickelvorrichtung und die Verspanneinheit sind über ein Kraftübertragungselement miteinander verbunden, welches zur Übertragung der beim Vorschub und Zurückziehen des Vorschubelementes auftretenden Kräfte bzw. Gegenkräfte ausgebildet ist. Diese Kräfte können so auf die Verspanneinheit und über diese auf die Wandung des Kanalrohres übertragen werden. Das Kraftübertragungselement kann flexibel ausgebildet sein, um ein einfaches Einführen der Verspanneinheit in ein Kanalrohr zu ermöglichen. Beispielsweise kann das Kraftübertragungselement ein flexibler Stab sein oder eine Anordnung mehrerer flexibler Stäbe, welche eine Kraftübertragung zwischen Wickelvorrichtung und Verspanneinheit ermöglichen. Alternativ kann das Kraftübertragungselement nach Art einer Bowdenzughülle hülsen- oder rohrförmig gestaltet sein, wobei das Vorschubelement im Inneren vor- und zurückbewegbar ist.

Nachfolgend wird die Erfindung beispielhaft anhand der beigefügten Figuren beschrieben. In diesen zeigt:
- Fig. 1: schematisch die Anordnung eines Kanalrohr-Inspektionssystems gemäß der Erfindung in einem Kanalrohr,
- Fig. 2: eine schematische perspektivische Ansicht der Verspanneinheit in einem Kanalrohr,
- Fig. 3: eine Draufsicht der Verspanneinheit gemäß Figur 1,
- Fig. 4: eine Schnittansicht der Verspanneinheit gemäß Figur 3,
- Fig. 5: eine Schnittansicht gemäß Figur 4 mit dem Kissen der Verspanneinheit im aufgeblasenen Zustand und
- Fig. 6: eine perspektivische Ansicht der Verspanneinheit entsprechend Figur 2 mit dem Kissen im aufgeblasenen Zustand.

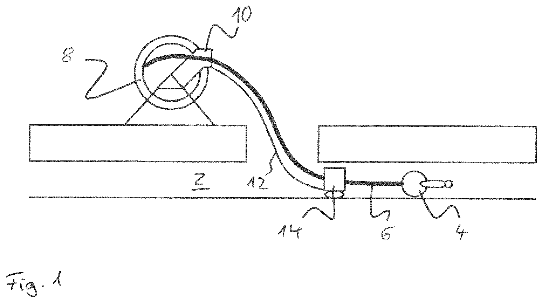

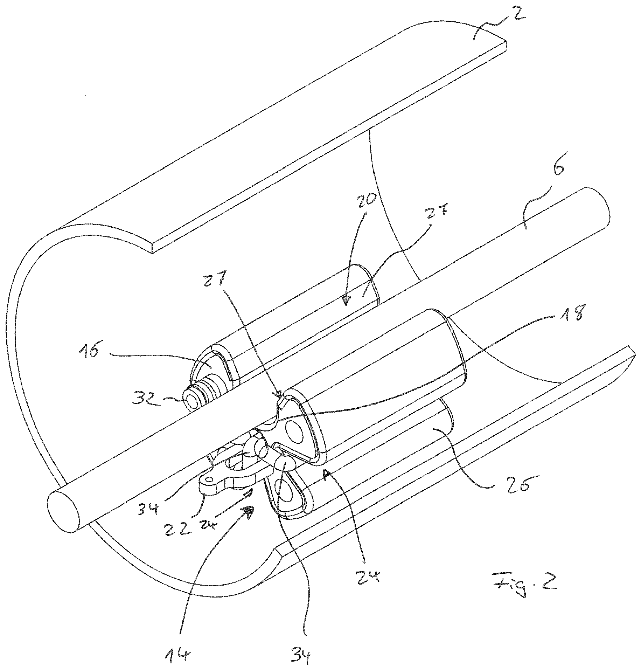

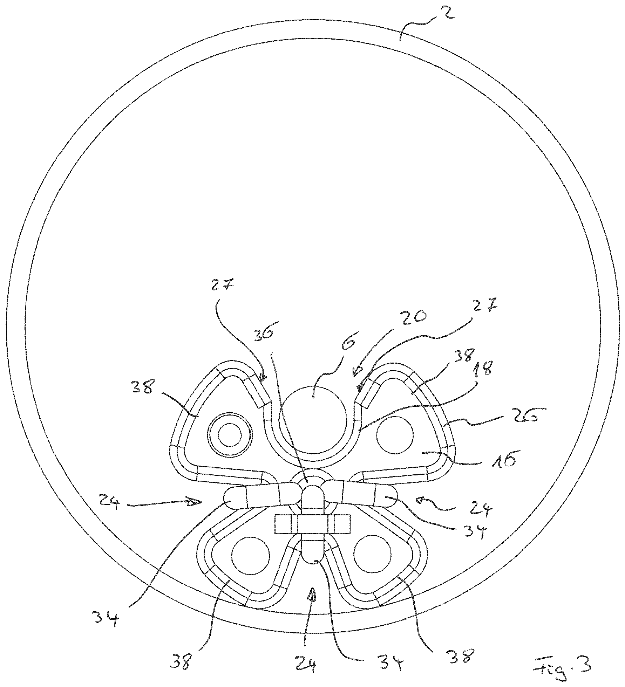

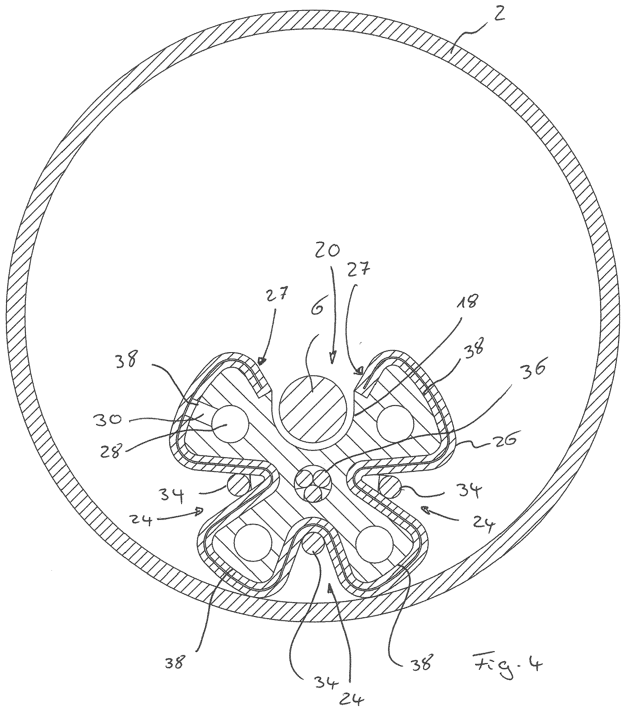

Figur 1 zeigt schematisch ein Kanalrohr 2 mit einem darin angeordneten Inspektionsgerät 4, beispielsweise einer Kamera und/oder einem Bearbeitungswerkzeug. Das Inspektionsgerät 4 ist am Ende eines Vorschubelementes 6, beispielweise eines Schiebestabes angeordnet, welcher auf einer Haspel 8 auf- und abwickelbar ist. Die Haspel 8 kann handbetrieben oder motorisch betrieben sein. Der Träger 10 der Haspel 8 ist über ein Kraftübertragungselement 12, beispielsweise einen flexiblen Stab, mit einer Verspanneinheit 14 verbunden. Die Verspanneinheit 14 ist dazu ausgebildet, sich im Inneren des Kanalrohrs 2 zu verspannen, wie es nachfolgend näher beschrieben wird. Über die Verspannung im Kanalrohr 2 wird ein Gegenlager für das Vorschubelement geschaffen. D.h. die beim Vorschieben und Zurückziehen des Vorschubelementes 6 auftretenden Kräfte, d.h. die Gegenkräfte, werden über das Kraftübertragungselement 12 auf die Verspanneinheit 14 und über diese auf die Wandung des Kanalrohrs 2 übertragen. Die Ausgestaltung der Verspanneinheit 14 wird näher anhand der Figuren 2 bis 6 beschrieben.

Die Verspanneinheit 14 weist einen Zentralkörper 16 auf, welcher in seinem Querschnitt kleiner als der Innenquerschnitt des Kanalrohres 2 ist. In diesem Ausführungsbeispiel hat der Zentralkörper 16 eine im Wesentlichen kleeblattförmige Querschnittsform. Der Zentralkörper 16 weist in einem Zentralbereich eine Führung 18 auf, welche sich über die gesamte axiale Länge erstreckt und welche das Vorschubelement 6 führt. Die Führung 18 weist eine zur Außenseite hin geöffnete Ausnehmung 20 auf, durch welche das Vorschubelement 6 von der Seite her in den Zentralkörper 16 bzw. die Führung 18 einlegbar ist. Die Führung 18 und die Ausnehmung 20 bilden somit eine nach außen offene Nut, in welche das Vorschubelement 6 eingelegt wird.

Der Zentralkörper 16 weist an einem Axialende eine Aufnahme 22 zur Verbindung mit dem Kraftübertragungselement 12 auf. Neben der von der Führung 18 und der Ausnehmung 20 gebildeten Nut weist der Zentralkörper 16 an seinem Außenumfang noch drei weitere nutförmige Einbuchtungen 24 auf, wobei im Querschnitt gesehen, die Ausnehmung 20 oben, eine Einbuchtung 24 unten und zwei weitere Einbuchtungen 24 seitlich an den Zentralkörper 16 ausgebildet sind (bei der vorgesehenen Betriebslage des Zentralkörpers 16). Zum Verspannen in dem Kanalrohr 2 ist ein aufblasbares Kissen 26 außenumfänglich an dem Zentralkörper 16 angeordnet. Das Kissen 26 erstreckt sich über den Umfang des Zentralkörpers 16, wobei der Bereich der Ausnehmung 20 frei bleibt. D.h. das Kissen 26 erstreckt sich über einen ersten Umfangsbereich, während die Ausnehmung 20 in einem zweiten Umfangsbereich gelegen ist. Somit erstreckt sich das Kissen 26 nicht vollumfänglich reich gelegen ist. Somit erstreckt sich das Kissen 26 nicht vollumfänglich und die Ausnehmung 20 bleibt nach außen offen, sodass das Vorschubelement 6 ohne Entfernen des Kissens 26 seitlich in die Führung 18 eingelegt werden kann.

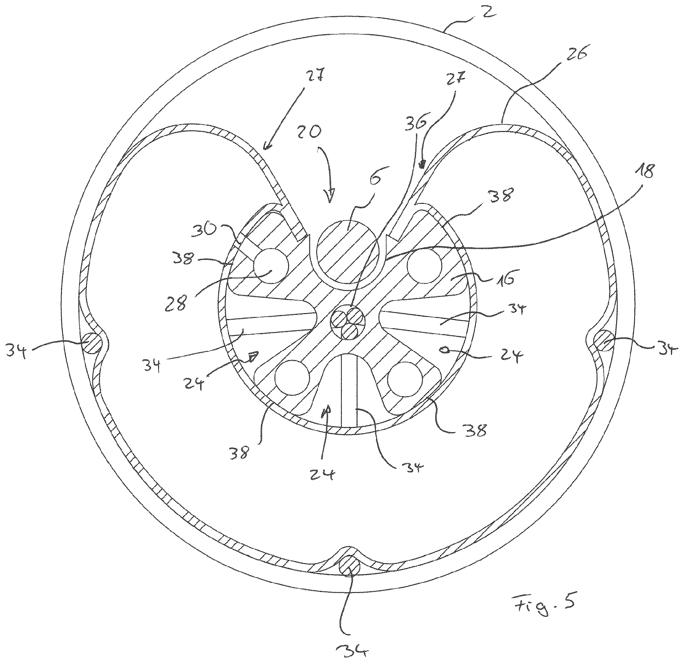

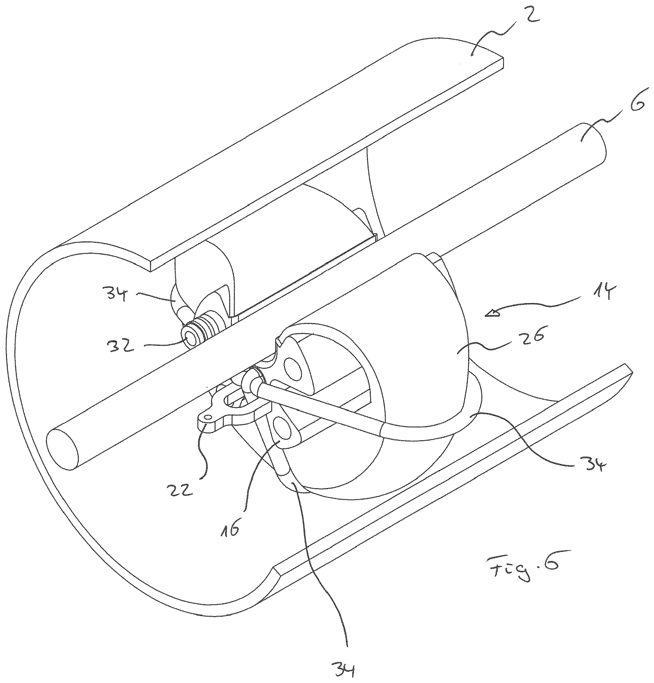

Die Figuren 5 und 6 zeigen das Kissen 26 in seinem aufgeblasenen Zustand. Das Aufblasen des Kissens 26 erfolgt über eine im Inneren des Zentralkörpers 16 ausgebildete Gaszufuhr 28, welche über zumindest eine Öffnung 30 mit dem Innenraum des Kissens 26 in Verbindung steht. Die Gaszufuhr 28 bzw. Gaszufuhrleitung 28 im Inneren des Zentralkörpers 16 endet an einem Leitungsanschluss 32 an dem Axialende des Zentralkörpers 16, an welchem auch die Aufnahme 22 gelegen ist. An den Leitungsanschluss 32 kann eine Druckgasleitung angeschlossen werden, welche nach außen geführt wird und an welche ein Druckerspeicher oder eine Pumpe, eine motorisch getriebene Pumpe oder Handpumpe angeschlossen werden kann, um das Kissen 26 von außen aufblasen zu können. Wie in Figuren 5 und 6 zu sehen ist, liegt das aufgeblasene Kissen mit seiner Außenwandung am Innenumfang des Kanalrohres 2 über einen Umfangsbereich von ungefähr 300° an. Radial über der Ausnehmung 20 ist ein zweiter Umfangsbereich- bzw. abschnitt gebildet, in dem kein Kissen an der Wandung des Kanalrohrs 2 anliegt. Hier wird somit ein Freiraum geschaffen, welcher beispielsweise auch zum Aufrechterhalten einer Vorflut genutzt werden kann. Da jedoch das Kissen 26 über mehr als 180° am Innenumfang des Kanalrohrs 2 anliegt, wird die Verspanneinheit 14 dennoch in allen radialen Richtungen im Inneren des Kanalrohrs 2 positioniert und durch die Klemmkraft des Kissens fixiert. Im gezeigten Beispiel lässt das aufgeblasene Kissen 26 radial außerhalb der Ausnehmung 20 eine sich radial nach außen erweiternde Lücke. Alternativ könnte in diesem Bereich von dem Kissen 26 auch eine Lücke mit im Wesentlichen konstanter Breite, d.h. parallelen Seitenflächen 27, gebildet werden, oder das Kissen 26 könnte sich beim Aufblasen in Umfangsrichtung derart ausdehnen, dass seine Seitenflan-Ausnehmung 2 aufgeblasen überdeckt. Durch das Aufblasen des Kissens 26 bewegt sich ferner der Zentralkörper 16 in die Mitte des Kanalrohres 2, sodass die Führung 18 im Zentralbereich des Kanalrohrs 2 gelegen ist und das Vorschubelement 6 nahe der Mittelachse des Kanalrohrs 2 geführt wird.

Um das Kissen 26 im nicht befüllten bzw. nicht aufgeblasenen Zustand sicher zu positionieren bzw. "zusammenzufalten" sind Zugelemente 34 in Form elastischer Bänder vorhanden. Die Zugelemente 34 sind in ihrer Länge elastisch dehnbar, sodass sie eine Federwirkung aufweisen. Die Zugelemente 34 bilden drei Schlaufen, welche sich durch einen sich in Längsrichtung durch den Zentralkörper 16 erstreckenden Kanal 36 erstrecken. Außen erstrecken sich die von den Zugelementen 34 gebildeten Ringe bzw. Schlaufen über die Außenseite bzw. den Außenumfang des Kissens 26. Dabei erstrecken sich die Zugelemente 34 parallel zur Längsachse bzw. Vorschubachse des Vorschubelementes 6 in Längsrichtung über das Kissen 26. Die drei von den Zugelementen 34 gebildeten Schlaufen sind dabei so positioniert, dass sie im Bereich der Einbuchtungen 24 gelegen sind, d.h. parallel zu den Einbuchtungen erstrecken. Die Zugelemente 34 sind in ihrer Länge so ausgebildet, dass, wenn das Kissen 26 nicht aufgeblasen ist, sie das Kissen 26 vollständig in die Einbuchtungen 24 hineinziehen und am Boden der Einbuchtungen 24 des Zentralkörpers 16 zur Anlage bringen. In diesem Ruhezustand, welcher in den Figuren 2, 3 und 4 gezeigt ist, liegt das nicht gefüllte Kissen 26 somit vollständig an der Außenkontur des Zentralkörpers 16 an. Diese Außenkontur wird von den Anlageabschnitten bzw. Anlageflächen 38 sowie den dazwischenliegenden Einbuchtungen 24 bzw. den Wandungen der Einbuchtungen 24 definiert. Diese Außenkontur in Umfangsrichtung weist eine Länge auf, welche im Wesentlichen der Länge des nicht aufgeblasenen Kissens 26 in Umfangsrichtung entspricht. So können die Zugelemente 34 das nicht aufgeblasene Kissen 26 in die Einbuchtungen 24 hineinziehen und das nicht aufgeblasene Kissen 26 Einbuchtungen 24 hineinziehen und das nicht aufgeblasene Kissen 26 kann im Wesentlichen faltenfrei an der Umfangskontur des Zentralkörpers 16 zur Anlage gebracht werden. So wird das Kissen im nicht befüllten Zustand sicher gehalten und der Querschnitt der Verspanneinheit 14 auf ein Minimum reduziert, was die Handhabung beim Ein- und Ausführen in das Kanalrohr 2 verbessert.

Wenn das Kissen 26 befüllt bzw. aufgeblasen wird, erzeugt der Innendruck eine Kraft, welche die Zugelemente 34 dehnt, sodass sich das Kissen 26 aus den Einbuchtungen 24 herausbewegt und am Außenumfang des Zentralkörpers 16 im Wesentlichen nur noch an den Anlageflächen 38 anliegt. Die Zugelemente 34 werden so weit gedehnt, dass sie zwischen der Außenfläche des Kissens 26 und der Innenwandung des Kanalrohrs 2 zu liegen kommen, wie in den Figuren 5 und 6 gezeigt ist. Wenn der Innendruck im Kissen 26 wegfällt, ziehen sich die Zugelemente 34 wieder zusammen und ziehen das Kissen 26 zurück in die Einbuchtungen 24.

### Bezugszeichenliste

- 2: Kanalrohr
- 4: Inspektionsgerät
- 6: Vorschubelement
- 8: Haspel
- 10: Träger
- 12: Kraftübertragungselement
- 14: Verspanneinheit
- 16: Zentralkörper
- 18: Führung
- 20: Ausnehmung
- 22: Aufnahme
- 24: Einbuchtungen
- 26: Kissen
- 27: Seitenflächen
- 28: Gaszufuhr
- 30: Öffnung
- 32: Leitungsanschluss
- 34: Zugelemente
- 36: Kanal
- 38: Anlageflächen

## Patentansprüche

1. Kanalrohr-Inspektionssystem mit einem Vorschubelement (6) zum Vorschieben eines Inspektionsgerätes (4) und mit einer Verspanneinheit (14), welche dazu ausgebildet ist, als Gegenlager für das Vorschubelement (6) im Inneren eines Kanalrohres (2) verspannt zu werden,
wobei die Verspanneinheit (14) einen Zentralkörper (16), der eine Führung (18) für das Vorschubelement (6) aufweist, und zumindest ein am Umfang des Zentralkörpers (16) angeordnetes aufblasbares Kissen (26) aufweist, welches sich zumindest in einem nicht aufgeblasenen Zustand über einen ersten Umfangsbereich kleiner 360° um den Zentralkörper (16) erstreckt, **dadurch gekennzeichnet, dass** die Führung (18) eine sich über die gesamte axiale Länge der Führung (18) erstreckende, zum Außenumfang der Verspanneinheit (14) hin gewandte Ausnehmung (20) aufweist, durch welche das Vorschubelement (6) vom Außenumfang her in die Führung (18) einlegbar ist.

2. Kanalrohr-Inspektionssystem nach Anspruch 1, **dadurch gekennzeichnet, dass** das zumindest eine aufblasbare Kissen (26) sich zumindest in einem nicht aufgeblasenen Zustand über einen ersten Umfangsbereich größer 270° und kleiner 320°, vorzugsweise über einen Umfangsbereich von 300° erstreckt.

3. Kanalrohr-Inspektionssystem nach Anspruch 1 oder 2, **dadurch gekennzeichnet, dass** das Kissen (26) aus einem elastisch aufweitbaren Material, vorzugsweise einem Elastomer oder Gummimaterial, gefertigt ist.

4. Kanalrohr-Inspektionssystem nach einem der vorangehenden Ansprüche, **dadurch gekennzeichnet, dass** das zumindest eine aufblasbare Kissen (26) aus einem Gewebematerial gefertigt ist.

5. Kanalrohr-Inspektionssystem nach einem der vorangehenden Ansprüche, **dadurch gekennzeichnet, dass** die Ausnehmung (20) in einem zweiten, von dem ersten Umfangsbereich verschiedenen Umfangsbereich gelegen ist.

6. Kanalrohr-Inspektionssystem nach einem der vorangehenden Ansprüche, **dadurch gekennzeichnet, dass** das zumindest eine aufblasbare Kissen (26) derart dimensioniert und geformt ist, dass es in seinem aufgeblasenen Zustand derart an einer Rohrwandung (2) zur Anlage kommen kann, dass es den Zentralkörper (16) im Inneren der Rohrwandung (2) verspannt.

7. Kanalrohr-Inspektionssystem nach einem der vorangehenden Ansprüche, **gekennzeichnet durch** eine mit dem zumindest einen aufblasbaren Kissen (26) verbundene Druckgaszufuhr (28, 32), welche vorzugsweise durch den Zentralkörper (16) verläuft.

8. Kanalrohr-Inspektionssystem nach einem der vorangehenden Ansprüche, **dadurch gekennzeichnet, dass** der Zentralkörper (16) an seinem Außenumfang radial äußere Anlageabschnitte (38) aufweist, an welchen das zumindest eine aufblasbare Kissen (26) zumindest in seinem aufgeblasenen Zustand zur Anlage kommt.

9. Kanalrohr-Inspektionssystem nach Anspruch 8, **gekennzeichnet durch** zwischen den Anlageabschnitten (38) gelegene Einbuchtungen (24).

10. Kanalrohr-Inspektionssystem nach Anspruch 9, **dadurch gekennzeichnet, dass** die Kontur der Anlageabschnitte (38) und der zwischen diesen gelegenen Einbuchtungen (24) in Umfangsrichtung eine Länge aufweist, welche der Länge des zumindest einen Kissens (26) in seinem nicht aufgeblasenen Zustand entspricht.

11. Kanalrohr-Inspektionssystem nach Anspruch 9 oder 10, **dadurch gekennzeichnet, dass** an dem Zentralkörper (16) und dem zumindest einen aufblasbaren Kissen (26) elastische Zugelemente (34) derart angeordnet sind, dass sie die im Bereich der Einbuchtungen (24) gelegenen Abschnitte des zumindest einen Kissens (26) in dessen nicht aufgeblasenen Zustand in die Einbuchtungen (24) hineinziehen.

12. Kanalrohr-Inspektionssystem nach Anspruch 11, **dadurch gekennzeichnet, dass** die Zugelemente (34) elastische Bänder sind, welche sich über die dem Zentralkörper (16) abgewandte Seite des zumindest einen Kissens (26) erstrecken.

13. Kanalrohr-Inspektionssystem nach Anspruch 11 oder 12, **dadurch gekennzeichnet, dass** sich jeweils ein Zugelement (34) parallel zu einer Einbuchtung (24) erstreckt.

14. Kanalrohr-Inspektionssystem nach einem der Ansprüche 11 bis 13, **dadurch gekennzeichnet, dass** die Zugelemente (34) durch zumindest einen sich in Längsrichtung durch den Zentralkörper (16) erstreckenden Kanal (36) geführt sind.

15. Kanalrohr-Inspektionssystem nach einem der vorangehenden Ansprüche, **gekennzeichnet durch** eine Wickelvorrichtung (8) zum Aufwickeln des Vorschubelementes (6) und ein die Wickelvorrichtung (8) und die Verspanneinheit (14) verbindendes Kraftübertragungselement (12), welches vorzugsweise zur Übertragung zumindest einer Zugkraft ausgebildet ist.

## Claims

1. Sewage-pipe inspection system comprising a feed element (6) for advancing an inspection device (4) and comprising a clamping unit (14) which is designed to be clamped as a counter-bearing for the feed element (6) inside a sewage pipe (2),
wherein
the clamping unit (14) comprises a central body (16) which comprises a guide (18) for the feed element (6) and at least one inflatable cushion (26) arranged on the circumference of the central body (16), which extends, at least in an uninflated state, across a first circumferential region of less than 360° around the central body (16),
**characterized in that**
the guide (18) comprises a recess (20) facing the outer circumference of the clamping unit (14) and extending across the entire axial length of the guide (18), through which the feed element (6) can be inserted into the guide (18) from the outer circumference.

2. The sewage-pipe inspection system according to Claim 1, **characterized in that** at least one inflatable cushion (26) extends across a first circumferential region greater than 270° and less than 320°, preferably across a circumferential region of 300°, at least in an uninflated state.

3. The sewage-pipe inspection system according to Claim 1 or 2, **characterized in that** the cushion (26) is made of an elastically expandable material, preferably an elastomer or rubber material.

4. The sewage-pipe inspection system according to any one of the preceding claims, **characterized in that** at least one inflatable cushion (26) is made of a fabric material.

5. The sewage-pipe inspection system according to any one of the preceding claims, **characterized in that** the recess (20) is located in a second circumferential region different from the first circumferential region.

6. The sewage-pipe inspection system according to any one of the preceding claims, **characterized in that** at least one inflatable cushion (26) is shaped and dimensioned in such a way that it can come to rest in its inflated state on a pipe wall (2) in such a way that it clamps the central body (16) inside the pipe wall (2).

7. The sewage-pipe inspection system according to any one of the preceding claims, **characterized by** a pressurized gas supply (28, 32) that is connected to at least one inflatable cushion (26) and preferably runs through the central body (16).

8. The sewage-pipe inspection system according to any one of the preceding claims, **characterized in that** the central body (16) comprises radially outer contact sections (38) on its outer circumference, on which the at least one inflatable cushion (26) comes to rest at least in its inflated state.

9. Sewage-pipe inspection system according to Claim 8, **characterized by** indentations (24) located between the contact sections (38).

10. The sewage-pipe inspection system according to Claim 9, **characterized in that** the contour of the contact sections (38) and the indentations (24) located between them in the circumferential direction has a length corresponding to the length of at least one cushion (26) in its uninflated state.

11. The sewage-pipe inspection system according to Claim 9 or 10, **characterized in that** elastic tensioning elements (34) are arranged on the central body (16) and on the at least one inflatable cushion (26) in such a way that they pull the sections of at least one cushion (26) located in the area of the indentations (24) into the indentations (24) in its uninflated state.

12. The sewage-pipe inspection system according to Claim 11, **characterized in that** the tensioning elements (34) are elastic bands extending across the side of at least one cushion (26) facing away from the central body (16).

13. The sewage-pipe inspection system according to Claim 11 or 12, **characterized in that** one tensioning element (34) extends parallel to an indentation (24).

14. The sewage-pipe inspection system according to any one of the Claims 11 to 13, **characterized in that** the tensioning elements (34) are guided through at least one channel (36) extending through the central body (16) in the longitudinal direction.

15. The sewage-pipe inspection system according to any one of the preceding claims, **characterized by** a winding device (8) for winding the feed element (6) and a power transmission element (12) connecting the winding device (8) and the clamping unit (14), which is preferably designed for the transmission of at least one tensile force.

## Revendications

1. Système d'inspection de tuyau de canalisation, comprenant un élément de poussée (6) permettant de pousser un appareil d'inspection (4) et une unité de serrage (14) conçue pour être serrée à l'intérieur d'un tuyau de canalisation (2) en tant que contre-appui pour l'élément de poussée (6),
dans lequel
l'unité de serrage (14) présente un corps central (16) présentant un moyen de guidage (18) pour l'élément de poussée (6), et au moins un coussinet gonflable (26) disposé sur la circonférence du corps central (16), lequel s'étend sur une première région circonférentielle inférieure à 360° autour du corps central (16) au moins dans un état non gonflé, **caractérisé en ce que**
le moyen de guidage (18) présente une cavité (20) s'étendant sur toute la longueur axiale du moyen de guidage (18) et tournée vers la circonférence extérieure de l'unité de serrage (14), laquelle permet d'insérer l'élément de poussée (6) dans le moyen de guidage (18) depuis la circonférence extérieure.

2. Système d'inspection de tuyau de canalisation selon la revendication 1, **caractérisé en ce que** l'au moins un coussinet gonflable (26) s'étend sur une première région circonférentielle supérieure à 270° et inférieure à 320°, de préférence sur une région circonférentielle de 300°, au moins dans un état non gonflé.

3. Système d'inspection de tuyau de canalisation selon la revendication 1 ou 2, **caractérisé en ce que** le coussinet (26) est constitué d'une matière élastiquement dilatable, de préférence un élastomère ou une matière de caoutchouc.

4. Système d'inspection de tuyau de canalisation selon l'une des revendications précédentes, **caractérisé en ce que** l'au moins un coussinet gonflable (26) est constitué d'une matière tissée.

5. Système d'inspection de tuyau de canalisation selon l'une des revendications précédentes, **caractérisé en ce que** la cavité (20) se situe dans une deuxième région circonférentielle différente de la première région circonférentielle.

6. Système d'inspection de tuyau de canalisation selon l'une des revendications précédentes, **caractérisé en ce que** l'au moins un coussinet gonflable (26) est dimensionné et formé de manière à pouvoir venir en appui sur une paroi de tuyau (2) dans son état gonflé, de sorte qu'il serre le corps central (16) à l'intérieur de la paroi de tuyau (2).

7. Système d'inspection de tuyau de canalisation selon l'une des revendications précédentes, **caractérisé par** une arrivée de gaz comprimé (28, 32) raccordée à l'au moins un coussinet gonflable (26), laquelle s'étend de préférence à travers le corps central (16).

8. Système d'inspection de tuyau de canalisation selon l'une des revendications précédentes, **caractérisé en ce que** le corps central (16) présente des sections d'appui radialement extérieures (38) sur sa circonférence extérieure, sur lesquelles l'au moins un coussinet gonflable (26) vient s'appuyer au moins dans son état gonflé.

9. Système d'inspection de tuyau de canalisation selon la revendication 8, **caractérisé par** des échancrures (24) situées entre les sections d'appui (38).

10. Système d'inspection de tuyau de canalisation selon la revendication 9, **caractérisé en ce que** le contour des sections d'appui (38) et des échancrures (24) situées entre celles-ci présente une longueur dans la direction circonférentielle, laquelle correspond à la longueur de l'au moins un coussinet (26) dans son état non gonflé.

11. Système d'inspection de tuyau de canalisation selon la revendication 9 ou 10, **caractérisé en ce que** sur le corps central (16) et l'au moins un coussinet gonflable (26), des éléments de traction élastiques (34) sont disposés de manière à tirer les sections de l'au moins un coussinet (26) situées dans la région des échancrures (24) dans les échancrures (24) dans l'état non gonflé de celui-ci.

12. Système d'inspection de tuyau de canalisation selon la revendication 11, **caractérisé en ce que** les éléments de traction (34) sont des bandes élastiques, lesquelles s'étendent sur le côté de l'au moins un coussinet (26) opposé au corps central (16).

13. Système d'inspection de tuyau de canalisation selon la revendication 11 ou 12, **caractérisé en ce qu'**un élément de traction (34) s'étend respectivement parallèlement à une échancrure (24).

14. Système d'inspection de tuyau de canalisation selon l'une des revendications 11 à 13, **caractérisé en ce que** les éléments de traction (34) sont guidés à travers au moins un canal (36) s'étendant dans le sens longitudinal à travers le corps central (16).

15. Système d'inspection de tuyau de canalisation selon l'une des revendications précédentes, **caractérisé par** un dispositif d'enroulement (8) permettant d'enrouler l'élément de poussée (6) et un élément de transmission de force (12) reliant le dispositif d'enroulement (8) et l'unité de serrage (14), lequel est conçu de préférence pour transmettre au moins une force de traction.
